# EUROPEAN PATENT APPLICATION

(11) **EP 2 251 254 A1**
(43) Date of publication of application: **17.11.2010**
(21) Application number: 10075110.6
(22) Date of filing: 12.03.2010
(51) Int. Cl.: B63B 35/00, B63B 35/34

(54) **Installation vessel for offshore wind turbines**

(30) Priority: 15.05.2009 NL 1036973
(71) Applicant: Leenars, Cees Eugen Jochem, 3225LE Hellevoetsluis (NL)
(72) Inventor: Leenars, Cees Eugen Jochem, 3225LE Hellevoetsluis (NL)

(57) **Abstract**

This invention relates to a transportation, installation and maintenance vessel (1) for wind turbines at sea. The vessel (1) is a semi-submersible (can partially submerge) and uses a number of spud poles (12) / legs to dampen vessel motions. As a result the vessel (1) forms a stable platform from where installation and maintenance work can be performed.

The hull is U-shaped. Through the moon pool at the aft which turbines and foundations can be skidded onboard. During transport the wind turbine(s) (3) is fastened on the main deck and the foundation(s) is fastened in the moon pool.

Submerging is done by pumping water into the ballast tanks. The spud poles (12) / legs are lowered on to the seabed by winches and/or a hydraulic system. A preload is applied on the spud (12) poles by means of the ballast tanks that can be emptied with compressed air or gravity filled.

## Description

### Background of the invention

Due to the increasing demand of environmental friendly sources of energy more and more wind farms are placed at sea. Unlike wind farms on land, off shore wind farms have a substantial lower noise- and view pollution. Also there is more space at sea. However, installation at sea is more problematical than onshore; first heavy foundations have to be laid after which mast, nacelle and blades have to be installed one-by-one. Usually jack-up barges are used but these are very sensitive to weather conditions. Therefore installation of wind turbines at the moment has to be done during the summer months.

### Description of the invention

In order to make installation of offshore wind turbines more efficiently a vessel has been designed that can transport and install wind turbine foundations and preassembled topsides simultaneously. During the installation process the vessel partially submerges, which improves vessel motions. This characteristic makes the vessel of the type semi-submersible.

To further enhance the motion behaviours a number of spud poles (or any other type of legs) can be lowered on to the sea bottom and clamped. The vessel forms a stable platform for lift- and installation activities.

The hull is U-shaped. This shape creates a moon pool where foundations and wind turbines can be skidded onto the vessel from quay side. This moon pool also forms the workspace from which offshore work can be performed.

The wind turbine is placed on the main deck during transport and the foundation is sea fastened in the moon pool. The vessel is equipped with a large crane that has sufficient capacity to perform installation work. At the place of destination water is pumped into the ballast tanks in order to increase draught. At the same time the spud poles are lowered and clamped. A preload is applied on the spud poles by taking in more ballast water in order to make the vessel more stable. Hereafter the foundation is lifted off the cross-beams by either winches or the main crane, after which they can be pulled aside. The foundation is now free to be lowered and installed on the seabed. Finally, the wind turbine is lifted and installed onto the foundation.

### Brief description of the drawings

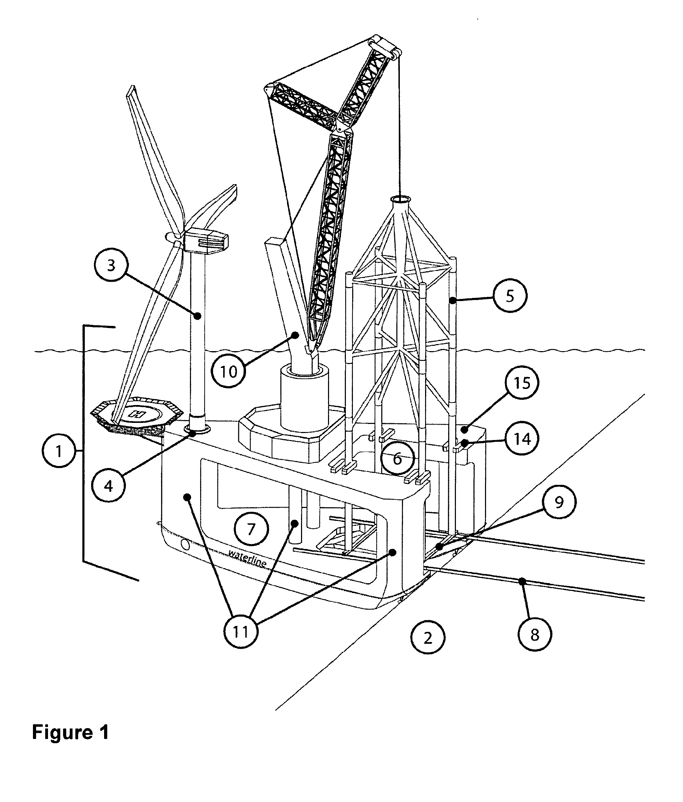

Figure 1 shows a vessel (1) at the quay side (2) that has a wind turbine (3) fastened on the main deck (4) and a foundation (5) fastened in the recess (6). The pontoon has skidding rails (8) so that firstly the wind turbine (3), standing on a cross-beam (9), can be skidded on board. The turbine can then be lifted with the crane (10) and fastened (4). Secondly, the foundation (5) is skidded into the recess (6) at the stem. The deck (15) is supported by three columns (11).

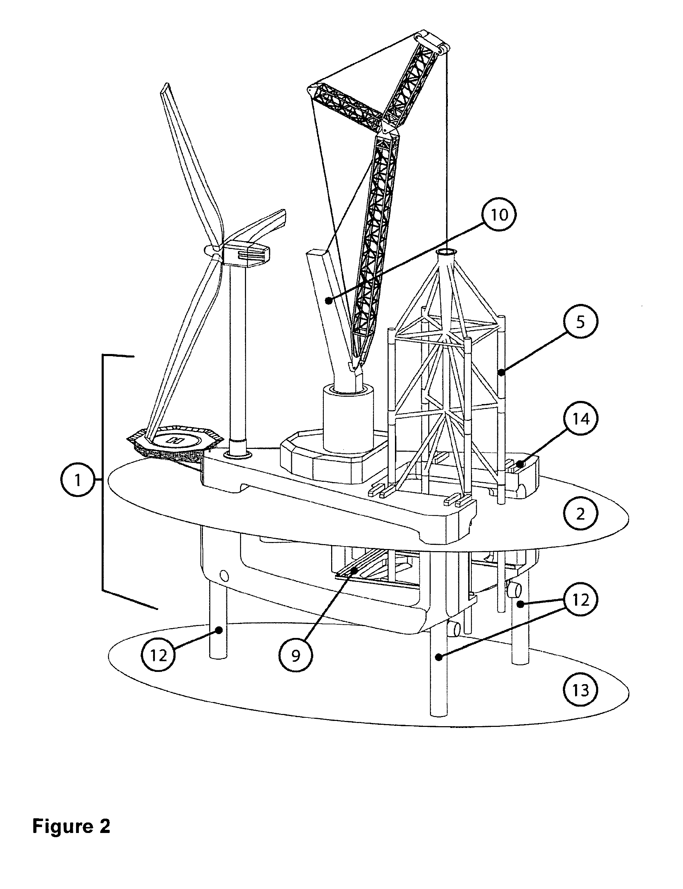

Figure 2 shows the vessel (1) during installation work. The vessel (1) is partially submerged into the water (2) and has a number of spud poles (12) that are preloaded on the seabed (13). The cross beams (9) are pulled aside which frees the foundation (5) so it can be lowered onto the seabed (13) with the hoist crane (10) or the davits (14).

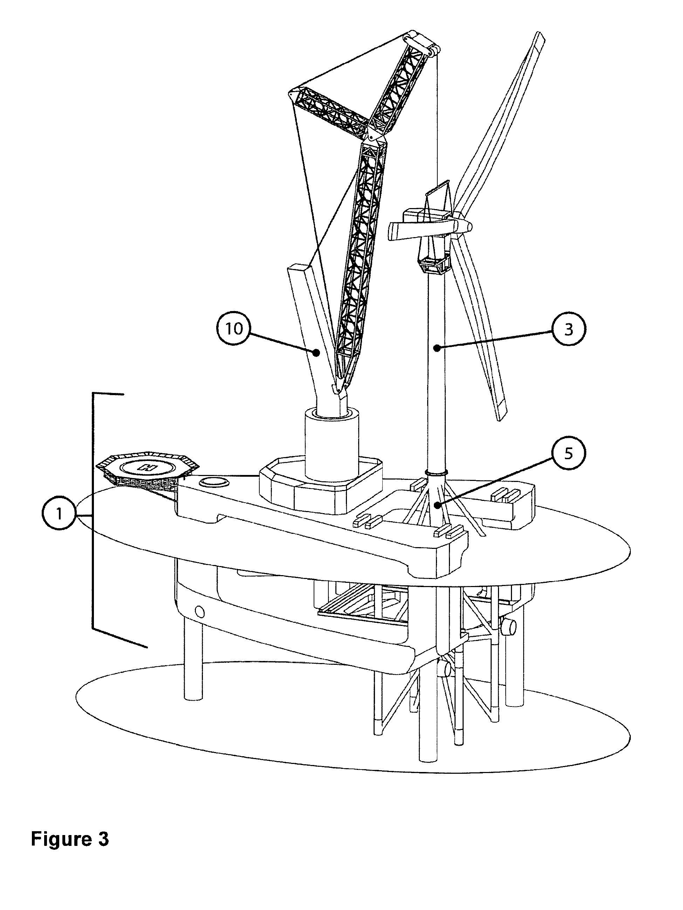

Figure 3 shows the vessel (1) at the moment that the crane (10) lifts the wind turbine (3) and places it onto the foundation (5).

## Claims

1. The vessel is a semi-submersible. The hull consists of one single pontoon with a deck that is supported by three vertical columns.

2. A vessel drawn from Claim 1 **characterized by** a pontoon that has a large moon pool which is structurally open on one or more sides such that wind turbine objects can be skidded into the moon pool.

3. A vessel drawn from Claim 1 **characterized by** a pontoon that has a large moon pool which serves the purpose of storage area for wind turbine objects such as monopiles and jackets. The moon pool is also used as workspace where installation work is done.

4. A vessel drawn from Claim 1 **characterized by** a moon pool and skid rails which make it possible to skid preassembled wind turbines, foundations or other structures into the moon pool.

5. A vessel drawn from Claim 1 that is used for offshore wind turbines transportation and installation.

6. A vessel drawn from Claim 1 that can operate either free-floating or with the use of a number of spud poles (or any other type of leg) to further dampen the motions if necessary. The spud poles are lowered onto the sea bottom and clamped. After ballasting operations the legs are preloaded.

7. A vessel drawn from Claim 1 **characterized by** the fact that it can transport and install one or more foundations and/or preassembled wind turbines simultaneously in a single operation.

8. A vessel drawn from Claim 1 that is fitted with a large crane that has sufficient capacity to lift foundations, preassembled wind turbines or any other type of structure.
